# EUROPEAN PATENT SPECIFICATION

(11) **EP 3 256 708 B1**
(45) Date of publication and mention of the grant of the patent: **22.05.2019**
(21) Application number: 16719003.2
(22) Date of filing: 27.01.2016
(51) Int. Cl.: F02C 6/06, F02C 6/08, F01B 17/02

(54) **MODULAR COMPLEX FOR PRODUCTION OF POWER BY COMBUSTION OF LIQUID AND GASEOUS FUELS**
MODULARER KOMPLEX ZUR ERZEUGUNG VON NUTZLEISTUNG DURCH VERBRENNUNG VON FLÜSSIGEN UND GASFÖRMIGEN BRENNSTOFFEN
COMPLEXE MODULAIRE POUR PRODUCTION DE PUISSANCE EFFECTIVE PAR COMBUSTION DE CARBURANTS LIQUIDES ET GAZEUX

(30) Priority: 10.02.2015 BG 11192715
(43) Date of publication of application: 20.12.2017
(73) Proprietor: KOLEV, Nikola, Varna 9005 (BG)
(72) Inventor: KOLEV, Nikola, Varna 9005 (BG)
(74) Representative: Vinarova, Emilia Zdravkova
(86) International application number: PCT/BG2016/000003
(87) International publication number: WO 2016/127228

(56) References cited:
- FR-A- 343 852
- FR-A- 1 025 583
- GB-A- 743 859
- US-A- 1 427 157
- US-A- 4 149 371

## Description

### FIELD OF APPLICATION

The modular complex for production of effective power through combustion of liquid and gaseous fuels is applicable in all transport and stationary equipment driven by internal combustion engines.

### PRIOR ART

A well-known modular complex for production of effective power through combustion of liquid and gaseous fuels, see US 4149371, comprises a heat production module, containing a combustion chamber, a gas turbine, a centrifugal compressor rigidly connected to the gas turbine shaft, and a mechanical module and a distribution module.

A disadvantage of that modular complex for production of effective power through combustion of liquid and gaseous fuels is that it is designed to operate at a constant speed of rotation of the turbocharger shaft and a constant flow rate of the fuel fed into the combustion chamber. This predetermines the parameters of the produced energy carrier - compressed air, to be variable in a narrow range with the change in the momentary consumption. For this reason, its application in practice is very limited. It is suitable to run on compressors and power generators that require a constant speed of rotation of the output shaft of the engine, to which they are connected. However, it is not applicable to run with engines of variable-in-a-wide-range speed of rotation of the engine output shaft.

Another disadvantage of that modular complex for production of effective power through combustion of liquid and gaseous fuels is the release into the ambience of a part of the produced energy carrier in cases where its pressure exceeds the preset one. This results in unjustified losses since part of the produced energy carrier is not used to produce mechanical power. This is the reason for the reduced efficiency of that modular complex for production of efficient power through combustion of liquid and gaseous fuels.

A rotary distributor for the compressed-air engine, see FR 1025583, is driven by the crankshaft of the engine, is known. The rotary distributor consists of a hollow cylinder enveloped by a sleeve and is revolved therein. The hollow cylinder has two groups of longitudinal grooves which are connected to a circumferential groove and holes that are arranged along the periphery of the hollow cylinder. The sleeve has formed holes arranged uniformly around the periphery thereof. The holes of the sleeve and the holes and grooves of the hollow cylinder are shaped as to allow successive communication of the piston space of each engine cylinder for feeding or discharge the fluid respectively.

### SUMMARY OF THE INVENTION

The aim of the invention is to create a modular complex for the production of efficient power by burning liquid and gaseous fuels which has an increased effective efficiency of over 60%, reduced fuel consumption, toxic oxides and noise levels.

The modular complex, according to the features of claim 1, for production of effective power through combustion of liquid and gaseous fuels comprising of a module designed to produce heat comprising a combustion chamber, a gas turbine, a centrifugal compressor fixed rigidly to the shaft of the gas turbine; a mechanical module and a distribution module comprising a charging manifold.

According to the invention, the mechanical module comprises four cylinders in a row with pistons connected by means of connecting rods to a crankshaft.

The distribution module is designed as a distribution plate, that closes the cylinders and that comprises a longitudinal horizontal cylindrical hole which is cut through along the longitudinal axis of the distribution plate. The said hole houses a camshaft allowing free rotation of it. In the distribution plate, in the area above each of the cylinders, there is a pair of opposite transverse horizontal channels to charge air and to discharge exhaust air. The axes of said channels are parallel to one another and perpendicular to the longitudinal axis of the distribution plate and are displaced relative to each other at a distance. The ends of the transverse horizontal channels are shaped as air-charging windows and exhaust-air-discharging windows, respectively. The air-charging window of each transverse horizontal channel is connected to the charging manifold charging air to the cylinders and the exhaust-air-discharging window of each transverse horizontal channel is connected to a discharging manifold for discharging the exhaust air from the cylinders. In the distribution plate, under the camshaft, and above each cylinder, there are vertical ducts made to charge air and to discharge the exhaust air, respectively.

The camshaft is executed as a smooth cylinder along which at a distance from each other and in its areas located above each cylinder there is a sectorial window to charge air as well as a sectorial window to discharge exhaust air. The said windows are cut through along the diameter of the camshaft and displaced relative to each other so as to provide for periodical and successive connection of cylinder with its corresponding horizontal transverse air-charging channel through the vertical duct as well as of its corresponding horizontal transverse exhaust-air-discharging channel with the corresponding vertical duct for discharging the exhaust air from the cylinder. The camshaft is driven by the crankshaft by means of gear at ratio of 1:1.

Each sectorial air-charging window of the camshaft is configured so as to provide connection of the air-charging manifold to the corresponding cylinder through the vertical duct when the piston has passed top dead centre (TDC) by 2 to 3 degrees and to close the air-charging window of the horizontal channel before the piston has reached bottom dead centre (BDC).

Each sectorial air-discharging window is configured such that, when the piston has reached bottom dead centre, it is located opposite the window of the transverse horizontal channel discharging the exhaust air to the manifold releasing the exhaust air through the vertical duct.

It is possible the discharging manifold for discharging the exhaust air to be connected to the suction of the centrifugal compressor.

The advantage of the modular complex for the production of efficient power by burning liquid and gaseous fuels according the invention is increased effective efficiency of over 60%, reduced fuel consumption, toxic oxides and noise levels.

### DETAILED DESCRIPTION OF THE PREFERRED EMBODIMENTS

The modular complex for production of effective power through combustion of liquid and gaseous fuels increases the effective efficiency above 60 per cent by changing the production of energy, transfer of energy to mechanical volumetric system and transformation of energy into power with two modules:
- Module for production of heat through combustion of liquid or gaseous fuels in combustion chamber. Combustion chamber is connected to the inlet of gas turbine with one or more working stages for transformation of heat energy into torque. Connected to turbine 2 shaft are one or more impellers of centrifugal compressor 3 for transformation of turbine energy into energy carrier (compressed air) with flow rate and pressure determined with the design for production of effective power at the required rotation frequency of the output shaft. Energy carrier is transferred and distributed with pipes and manifolds 4, 14 to consumer - mechanical module of variable volumes.
- Mechanical module with variable volumes for transformation of carrier energy into effective power and effective revolutions via crankshaft 11 fixed in crankcase 12 and connected with pistons 9 via connecting rods 10 to modify the volume in cylinders 8 (crankgear). Cylinders 8 are closed by plate 5 with windows for charging with energy carrier on one side and for discharging on the other side. Distribution manifold 4 feeds compressed air to cylinder 8 charging windows when the piston 9 is moving from top to bottom dead center, and a hole cut in cylinder camshaft 6 fitted plate 5 longitudinal hole connects pressure manifold 4 with cylinder 8 windows. The rear edge of cylinder camshaft 6 closes charging window 7-10° before bottom dead center, to expand air and reduce pressure.

With the piston 9 at bottom dead center, the camshaft 6 has turned at 180 degrees to position 9 when the sectional window 6a provides connection between cylinder 8 space and exhaust duct 7g to exhaust manifold 14 and centrifugal compressor 3 suction side or ambiance. Provision is also made for closed contour of air circulation.

High pressure pipe is equipped with branch for transfer of compressed air into combustion chamber 1 and charging the receiver with compressed air required for initial ignition or electric motor.

Low pressure pipe equipped with branch for fitting of filter 15 for supplementary air or suction of flow rate.

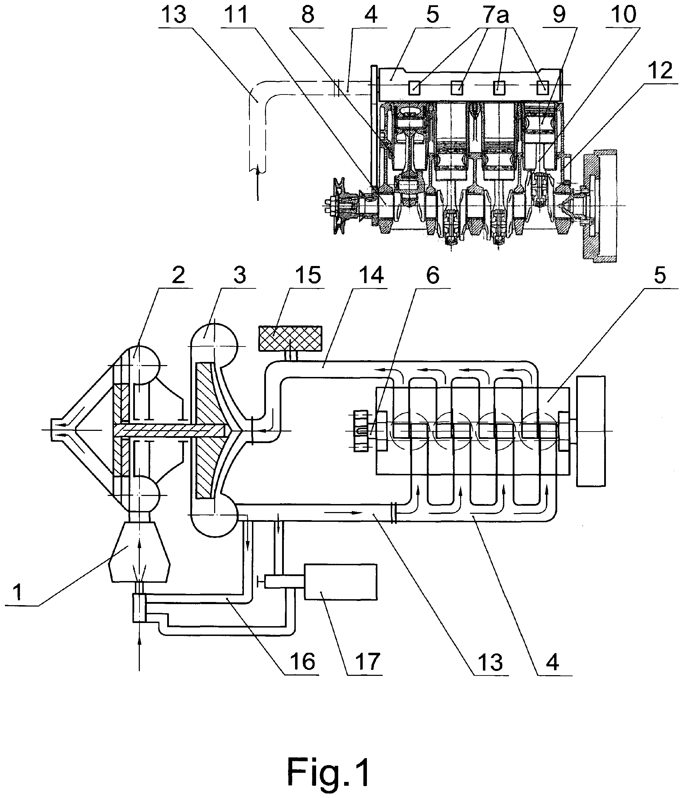

Illustrated on *Figure 1* is a modular complex for production of effective power through combustion of liquid and gaseous fuels.

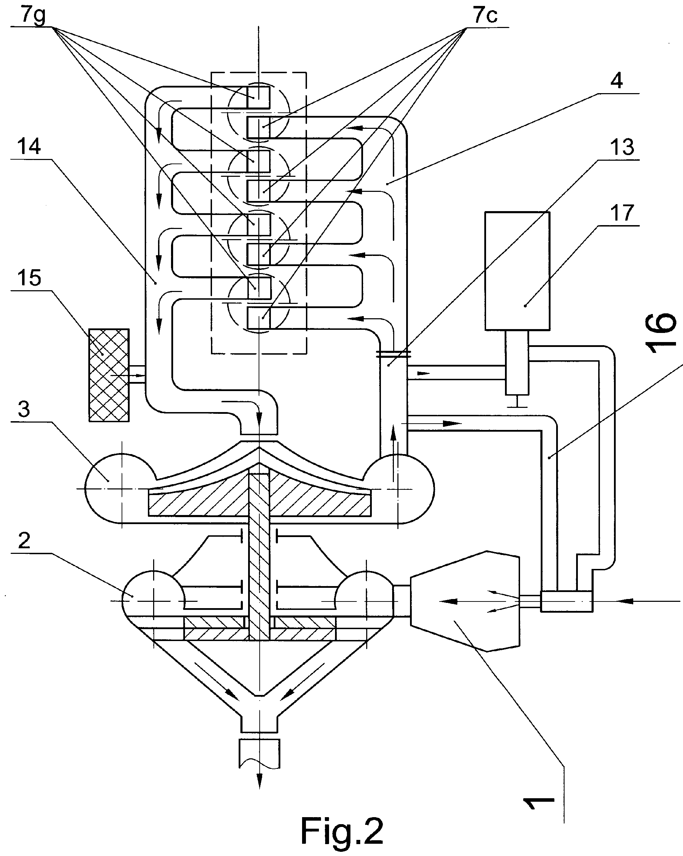

Illustrated on *Figure 2* is a heat production module, comprising:
- Combustion chamber 1 with burner for combustion of liquid or gaseous fuel. Burner of chamber 1 is charged with air for initial ignition from compressed air receiver 17, and with the compressor 3 in operation - from pipeline 16.
- Gas turbine 2 with one or more stages for transformation of heat energy into mechanical power and centrifugal compressor 3 connected to turbine 2 shaft for production of energy carrier (compressed air).

Combustion chamber 1, turbine 2 and compressor 3 (turbocharger) are designed for production of flow rate and pressure required for filling the working volumes of mechanical system (cylinders 8) with pressures to provide desired effective power at design frequency of rotation of output shaft. Energy carrier is distributed to working volumes of cylinders 8 from, manifold 4 (e.g. 4 volumes). Exhaust air is discharged via manifold 14 to the suction side of compressor 3 in a closed cycle or to ambiance. The pipeline to compressor 3 suction side is equipped with a branch with filter 15 to compensate the consumed combustion air and regulate gas temperature.

Fuel and air flow rates to burner are connected in a common regulation system providing complete combustion of fuels at the permissible gas temperature upstream gas turbine 2. Pipelines for transfer of energy carrier and manifolds 4, 14 are less than 100 cm long and nonmetal made, withstanding temperature up to 120° C and pressure up to 10 bars.

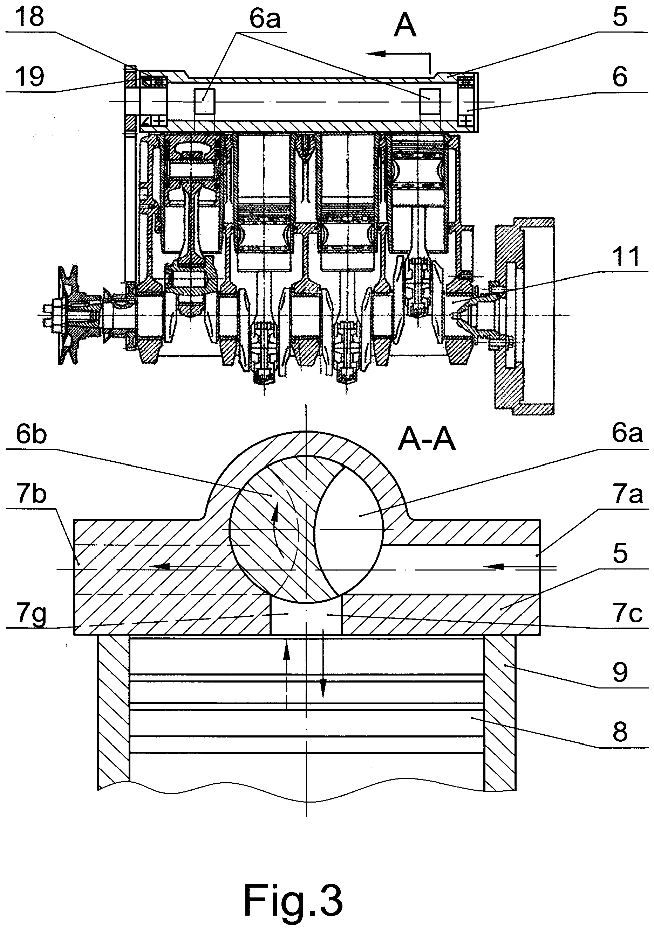

Illustrated on *Figure 3* is the module for transformation of carrier energy into effective power, comprising mechanical module (cylinders 8, crankcase 12, pistons 9, connecting rods 10, and shaft 11).

In the distribution plate 5, in the area over each of cylinders 8, there is formed one pair of opposite transverse horizontal cannels for air-charging 7a and for discharging exhaust air 7b, whose axes are in parallel to one another and perpendicular to the longitudinal axis of the distribution plate 5 and are shifted to one another on a distance. The ends of the transverse horizontal channels 7a and 7b are shaped as air-feeding window and as exhaust-air window, respectively.

The cylinder 8 is closed by the plate 5 with windows of channels 7a and 7c for feeding air into cylinder 8, and windows of channels 7b and 7g, for discharging exhaust air. Mechanical module may have different design.

The camshaft 6 is executed as a smooth cylinder along which at a distance from each other and in its areas located above each cylinder, there is a sectorial window 6a to charge air as well as a sectorial window 6b to discharge exhaust air. The said windows 6a and 6b are cut through along the diameter of the camshaft 6 and displaced relative to each other so as to provide for periodical and successive connection of cylinder 8 with its corresponding horizontal transverse air-charging channel 7a through the vertical duct 7c as well as of its corresponding horizontal transverse exhaust-air-discharging channel 7b with the corresponding vertical duct 7g for discharging the exhaust air from the cylinder 8. The camshaft 6 is driven by the crankshaft 11 by means of gear at ratio of 1:1

Compressed air is fed to cylinder 8 when the shaft 6 fixed in the cylindrical hole of the plate 5 along diameter length, connects windows of canals 7a and 7c for feeding air to cylinder 8 through section window 6a which connects compressed air from manifold 4 with cylinder 8 when the piston 9 has overpassed top dead center by 2-3 degrees.

The shaft 6 rotates in line with the revolutions of the crankshaft 11.

The rear edge of window 6a closes window of channel 7a before piston 9 comes bottom dead center. When piston 9 comes to bottom dead center, section window 6b, located on shaft 6 against exhaust window of channel 7b, connects cylinder 8 via window of channel 7g for discharging air via manifold 14 to the suction side of compressor 3, or into ambiance.

Each piston 9 makes one stroke from top to bottom dead center for one rotation of shaft 11. The plate 5 may be manufactured from nonmetal material.

The modular complex for production of effective power through combustion of liquid and gaseous fuels may be manufactured under the original design of combustion chamber 1, gas turbine 2, compressor 3, and variable volume unit corresponding to output shaft revolutions. Modular complex may also incorporate existing turbochargers for passenger vehicles and trucks able to produce flow rate determined by the total volume of cylinders multiplied by the frequency of rotation of output shaft and with air pressure 3-7 bar.

Example: Effective power *Ne* = *74 kW* at frequency of rotation of output shaft *n* = *2800 min⁻¹* produced with turbocharger flow rate *12 m³*/*min* and air pressure *Pk* =*5 bar,* and maximum force *4000 N.* With air pressure *Pk* =*3 bar,* the power is *45 kW,* and the maximum force acting on piston is *2400 N.*

With the increment of piston 9 area, the effective power increases too.

Distribution plate 5 closes cylinder 8 holes, feeds air to and from cylinder 8 through windows of channels 7a and 7c, and discharges air from cylinder 8 through window of channels 7g and 7b with feeding and discharging controlled in time by camshaft 6 with section windows 6a for filling the cylinder 8 and 6b for discharging air.

The shaft 6 is seating on two bearings, sealed at both ends with lip seals and rotating in line with the frequency of rotation of the output (crank) shaft.

The original production of modular complex takes place at the existing facility with reduced costs and simplified outfitting.

The modular complex for production of effective power through combustion of liquid and gaseous fuels is applicable in all means of transport without modifications to transmissions, and with enhanced efficiency of production and consumption, reduced noise and toxic wastes levels as well as fuel consumption costs.

## Claims

1. Modular complex for production of effective power through combustion of liquid and gaseous fuels comprising of:
• a module designed to produce heat comprising a combustion chamber (1), a gas turbine (2), a centrifugal compressor (3) fixed rigidly to the shaft of the gas turbine;
• a mechanical module;
• a distribution module comprising a charging manifold (4) fluidly connected to the outlet of the centrifugal compressor,
**characterized in that**
• the mechanical module comprises four cylinders (8) in a row with pistons (9) connected by means of connecting rods (10) to a crankshaft (11);
• the distribution module is designed as a distribution plate (5) that closes the cylinders (8) and that comprises a longitudinal horizontal cylindrical hole which is cut through along the longitudinal axis of the distribution plate (5), the said hole houses a camshaft (6) allowing free rotation of it; in the distribution plate (5), in the area above each of the cylinders (8), there is a pair of opposite transverse horizontal channels (7a and 7b) to charge air and to discharge exhaust air, the axes of said channels (7a, 7b) are parallel one another and perpendicular to the longitudinal axis of the distribution plate (5) and are displaced relative to each other at a distance; the ends of the transverse horizontal channels (7a and 7b) being shaped as air-charging windows and exhaust-air-discharging windows, respectively, as the air-charging window of each transverse horizontal channel (7a) is connected to the charging manifold (4) for charging air to the cylinders (8) and the exhaust-air-discharging window of each transverse horizontal channel (7b) is connected to a discharging manifold (14) for discharging the exhaust air from the cylinders (8), whereat in the distribution plate (5), under the camshaft (6), and above each cylinder (8), there are vertical ducts (7c and 7g) made to charge air and to discharge the exhaust air respectively;
• the camshaft (6) is executed as a smooth cylinder, along which at a distance from each other and in its areas located above each cylinder (8), there is a sectorial window (6a) to charge air as well as a sectorial window (6b) to discharge exhaust air, as the said windows (6a and 6b) are cut through along the diameter of the camshaft (6) and displaced relative to each other so as to provide for periodical and successive connection of cylinder (8) with its corresponding horizontal transverse air-charging channel (7a) through the vertical duct (7c) as well as of its corresponding horizontal transverse exhaust-air-discharging channel (7b) with the corresponding vertical duct (7g) for discharging the exhaust air from the cylinder (8), the camshaft (6) being driven by the crankshaft (11) by means of gear at ratio of 1:1;
• each sectorial air-charging window (6a) of the camshaft (6) is configured so as to provide connection of the air-charging manifold (4) to the corresponding cylinder (8) through the vertical duct (7c) when the piston (9) has passed top dead centre (TDC) by 2 to 3 degrees and to close the air-charging window of the horizontal channel (7a) before the piston (9) has reached bottom dead centre (BDC);
• each sectorial air-discharging window (6b) is configured such that, when the piston (9) has reached bottom dead centre, it is located opposite the window of the transverse horizontal channel (7b) discharging the exhaust air to the manifold (14) releasing the exhaust air through the vertical duct (7g).

2. Modular complex for production of efficient power through combustion of liquid and gaseous fuels according to claim 1, **characterized in that** a discharging manifold (14) for discharging the exhaust air is connected to the suction inlet of the centrifugal compressor (3).

## Patentansprüche

1. Ein modularer Komplex zur Erzeugung effizienter Leistung durch Verbrennung von flüssigen und gasförmigen Brennstoffen, bestehend aus:
- einem Modul zur Wärmeerzeugung mit einer Verbrennungskammer (1), einer Gasturbine (2), einem an der Welle der Gasturbine befestigten Zentrifugalverdichter (3);
- einem mechanischen Modul;
- einem Verteilermodul mit einem Füllkrümmer (4), der mit dem Auslass des Zentrifugalverdichters gekoppelt ist,
**dadurch gekennzeichnet, dass**
- der mechanische Modul vier Zylinder (8) umfasst, die in einer Reihe angeordnet sind, wobei die Kolben (9) durch einen entsprechenden Pleuel (10) mit der Kurbelwelle (11) verbunden sind;
- das Verteilermodul als eine Verteilerplatte (5) ausgeführt ist, die die Zylinder (8) verschließt, wobei entlang der Längsachse der Verteilerplatte (5) ein horizontaler zylindrischer Längskanal ausgebildet ist, in dem eine frei drehbare Nockenwelle (6) eingebaut ist, und in der Verteilerplatte (5), in dem Bereich über jeden der Zylinder (8), je ein Paar von gegenüberliegenden horizontalen Querkanälen für die Luftzufuhr (7a) und für den Abluftaustritt (7b) ausgebildet ist, deren Achsen parallel zueinander und senkrecht zur Längsachse der Verteilerplatte (5) sind und voneinander in einem Abstand verschoben sind, indem die Enden der horizontalen Querkanälen (7a und 7b) als Öffnungen für Luftzufuhr, entsprechend - Öffnungen für Luftabfuhr der Abluft ausgebildet sind, wobei die Öffnung für Luftzufuhr eines jeden horizontalen Querkanäls (7a) mit dem Kollektor /Krümmer/ für Luftzufuhr (4) zu den Zylindern (8) verbunden ist, und die Öffnung für Abluftabfuhr eines jeden horizontalen Querkanäls (7b) mit dem Kollektor für Abluftabfuhr (14) von den Zylindern (8) verbunden ist, indem in der Verteilerplatte (5), unter der Nockenwelle (6) und über jeden Zylinder (8) senkrechte Luftzufuhrkanäle (7c) und Abluftabfuhrkanäle (7g) ausgebildet sind;
- die Nockenwelle (6) als glatter Zylinder ausgebildet ist, entlang dem, in Abstand voneinander, in den Bereichen über jeden Zylinder (8), eine Öffnung für die Luftzufuhr (6a) und eine Öffnung für die Abluftabfuhr (6b) augebildet sind, die am Durchmesser der Welle (6) geschnitten sind und zueinander so verstellt sind, dass sie eine intermittierende und sequentielle Verbindung des entsprechenden Zylinders (8) mit seinem entsprechenden horizontalen Querzuluftkanal zum Luftzufuhr (7a) durch den vertikalen Kanal (7c) sowie auch des entsprechenden horizontalen Querabluftkanal zum Abluftabfuhr (7b) mit dem entsprechenden vertikalen Kanal (7g) zum Abfuhr des Abluft vom Zylinder (8) ermöglichen, indem die Nockenwelle (6) durch die Kurbelwelle (11) mittels eines Getriebes im Übersetzungsverhältnis 1:1 angetriebn wird;
- jede Luftzufuhröffnung (6a) der Nockenwelle (6) so konfiguriert ist, dass sie die Verbindung des Kollektors für Luftzufuhr (4) mit dem entsprechenden Zylinder (8) durch den senkrechten Kanal (7c) gewährleistet, zu diesem Zeitpunkt, wenn der Kolben (9) den oberen Totpunkt um 2 bis 3 Grad zurückgelassen hat und dann die Luftzufuhröffnung (7a) des horizontalen Kanals schließt, bevor der Kolben (9) den unteren Totpunkt erreicht,
- jede Öffnung für den Abfuhr der Abluft (6b) ist so konfiguriert, dass es sich beim Erreichen seitens des Kolbens (9) den unteren Totpunkt der Öffnung des horizontalen Querkanals (7b) für den Abluftabfuhr zum Kollektor für den Abluftabfuhr (14) durch den vertikalen Kanal (7g) gegenüber befindet.

2. Ein modularer Komplex zur Erzeugung effizienter Leistung durch Verbrennung von flüssigen und gasförmigen Brennstoffen nach Anspruch 1, **dadurch gekennzeichnet, dass** der Abluftkrümmer (14) mit dem Saugeinlass des Zentrifugalverdichters (3) verbunden ist.

## Revendications

1. Groupe module de production de puissance effective par la combustion de combustibles liquides et gazeux, composé de :
- Module de production de chaleur, constitué de chambre de combustion (1), turbine à gaz (2), compresseur centrifuge (3) fixé à l'arbre de la turbine à gaz;
- Module mécanique ;
- Module de distribution, contenant un collecteur de remplissage (4) connecté à la sortie du compresseur centrifuge ;
- **caractérisé par** :
- Le module mécanique contient quatre cylindres (8) disposés en ligne, à pistons (9), liés par la bielle appropriée (10) à l'arbre vilebrequin (11) ;
- Le module de distribution représente une plaque de distribution (5), qui ferme les cylindres (8), et à l'axe longitudinal de la plaque de distribution (5) est élaboré un canal cylindrique horizontal, assurant la rotation libre de l'arbre de distribution (6) y inséré ; et dans la plaque de distribution (5), dans la zone au-dessus de chaque cylindre (8), est disposé à l'opposite un couple de canaux horizontaux transversaux - un pour l'admission d'air (7a) et l'autre pour évacuer l'air d'échappement (7b), et dont les axes sont parallèles l'un par rapport à l'autre et perpendiculaires à l'axe de la plaque de distribution (5), étant à distance l'un de l'autre ; les extrémités des canaux horizontaux transversaux (7a et 7b) sont façonnée en ouvertures rectangulaires d'admission d'air, respectivement d'évacuation d'air d'échappement, l'ouverture d'admission d'air de chaque canal horizontal transversal (7a) est connectée au collecteur d'admission d'air (4) vers les cylindres (8), et l'ouverture d'évacuation de l'air d'échappement de chaque canal horizontal transversal (7b) est connectée au collecteur d'évacuation de l'air d'échappement (14) depuis les cylindres (8), étant précisé que, dans la plaque de distribution (5), sous l'arbre de distribution (6) et au-dessus de chaque cylindre (8), il y a des canaux verticaux pour l'admission d'air (7c) et pour d'évacuation de l'air d'échappement (7g) ;
- l'arbre de distribution (6) représente un cylindre lis, à la longueur duquel, à distance l'une de l'autre, et dans les zones au-dessus de chaque cylindre (8), sont disposées une ouverture d'admission d'air (6a) de secteur et une ouverture d'évacuation de l'air d'échappement (6b) de secteur, percées en direction du diamètre de l'arbre (6) et à distance l'une de l'autre, de façon à assurer la possibilité de connecter périodiquement et séquentiellement le cylindre correspondant (8) à son canal horizontal transversal d'admission d'air correspondant (7a) à travers le canal vertical correspondant (7c), comme à son canal horizontal transversal d'évacuation d'air d'échappement correspondant (7b), au canal vertical d'évacuation de l'air d'échappement correspondant (7g) du cylindre 8, l'arbre de distribution (6) étant entraîné par l'arbre vilebrequin (11) à rapport d'entraînement 1:1;
- Chaque ouverture de secteur d'admission d'air (6a) de l'arbre de distribution (6) est élaborée de façon à assurer la connexion du collecteur d'admission d'air (4) au cylindre correspondant (8) à travers le canal vertical (7c), quand le piston a dépassé le point mort haut de 2-3 grades et à fermer l'ouverture du canal horizontal d'admission d'air (7a) avant que le piston (9) soit arrivé au point mort inférieur.
- Chaque ouverture du secteur d'évacuation de l'air d'échappement (6b) est élaborée de façon, qu'à l'arrivée du piston (9) au point mort inférieur, elle soit disposée à l'opposite de l'ouverture du canal horizontal transversal (7b) d'évacuation de l'air d'échappement vers le collecteur d'évacuation de l'air d'échappement (14) à travers le canal vertical (7g).

2. Le Groupe module de production de puissance effective par la combustion de combustibles liquides et gazeux, conformément à la Prétention 1, **caractérisé par le fait qu'**à l'entrée de succion du compresseur centrifuge (3) est connecté le collecteur d'évacuation de l'air d'échappement (14).
